Europäisches Patentamt

European Patent Office

Office européen des brevets

(11) Publication number: **0 366 200**
A1

## EUROPEAN PATENT APPLICATION

(21) Application number: 89202675.8

(22) Date of filing: 24.10.89

(51) Int. Cl.⁵: **B27C 1/12 , B27B 25/04 , B27B 31/00 , B23Q 7/03**

(30) Priority: 24.10.88 NL 8802615

(43) Date of publication of application:
02.05.90 Bulletin 90/18

(84) Designated Contracting States:
CH DE GB IT LI NL SE

(71) Applicant: **Trompert, Stephanus Franciscus**
**Clavecimbellaan 433**
**NL-2287 VR Rijswijk(NL)**

(72) Inventor: **Trompert, Stephanus Franciscus**
**Clavecimbellaan 433**
**NL-2287 VR Rijswijk(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

(54) **A conveying and positioning apparatus.**

(57) A conveying and positioning apparatus for longitudinally conveying an elongate object to be processed to and from a processing device, and for fixing the object (100) to be processed in a desired position relative to the processing device comprising:
- a first endless conveyor means mounted over a first pair of spaced apart, parallel conveyor support means;
- a second endless conveyor means mounted over a second pair of spaced apart, parallel conveyor support means;
- a drive means for synchronously driving the first and the second conveyor means; and
- a control device for controlling the drive means;
- the first pair and the second pair of conveyor support means being disposed upstream (11), and downstream (12), respectively, of the processing device, wherein the first assembly of first conveyor means and first pair of conveyor support means is movable in vertical direction and the second assembly of second conveyor means and second pair of conveyor support means is movable both vertically and horizontally, said second assembly being connected to the first assembly by means of a connecting frame (80) for movement along a cylindrical path around an axis associated with the first assembly, parallel to the axis of rotation of the first pair of conveyor support means.

FIG-1

## A conveying and positioning apparatus

This invention relates to a conveying and positioning apparatus for longitudinally conveying an elongate object to be processed to and from a processing device, and for fixing the object to be processed in a desired position relative to the processing device comprising:
- a first endless conveyor means mounted over a first pair of spaced apart, parallel conveyor support means;
- a second endless conveyor means mounted over a second pair of spaced apart, parallel conveyor support means;
- a drive means for synchronously driving the first and the second conveyor means; and
- a control device for controlling the drive means;
- the first pair and the second pair of conveyor support means being disposed upstream, and downstream, respectively, of the processing device.

An apparatus of this type is known from German Gebrauchsmuster 87,14714.

The conveyor means may be a conveyor belt or a conveyor chain.

The known apparatus is used e.g. when wooden objects are sawn through at right angles to the longitudinal direction. The object is conveyed into the desired position by means of the apparatus, after which the object is fixed in this position relative to the saw. After sawing, the two halves are fixed or conveyed separately by the two conveyor means.

The known apparatus has the disadvantage, that it is not quite suitable to convey objects having a rough surface or objects that are curved. Another drawback of the known apparatus is that even if it is possible to convey objects having a rough surface or being curved, no sufficient accuracy is obtained during positioning.

It is an object of the present invention to remove these drawbacks. It is a general object of the present invention to provide a conveying and positioning apparatus having improved positioning accuracy.

In particular, it is an object of the invention to provide a conveying and positioning apparatus with which it is possible to accurately position elongate objects, even if they are curved or rough.

More in particular, it is an object of the present invention to provide a conveying and positioning apparatus enabling in a simple manner to quickly convey the objects to be processed to and from a standard processing device, without the occurrence of slip, and to position these objects as accurately as possible to obtain a highly accurately processed object, which conveying and positioning apparatus further is suitable for conveying and positioning objects of any roughness, composition and form, because a slip-free coupling with the object to be conveyed is ensured at any time.

To that effect, the apparatus of the above described type according to the present invention is constructed in such a manner that the first assembly of first conveyor means and first pair of conveyor support means is movable in vertical direction and that the second assembly of second conveyor means and second pair of conveyor support means is movable both vertically and horizontally, said second assembly being connected to the first assembly by means of a connecting frame for movement along a cylindrical path around an axis associated with the first assembly, parallel to the axis of rotation of the first pair of conveyor support means.

This arrangement makes it possible to take up variations in thickness of the object to be conveyed with maintaining a proper coupling between the conveyor means and the object, while the dimensional accuracy remains ensured. The conveyor support means may be rollers.

Preferably, there are provided a first conveyor drive means and a second conveyor drive means for the first and the second conveyor means, respectively, wherein the first assembly is rotatable around the axis of the first conveyor drive means and the second assembly is rotatable around the axis of the second conveyor drive means, and wherein the two conveyor drive means are interconnected by means of a coupling member.

The coupling member may for instance be a geared belt or a chain.

Advantageously, the first conveyor drive means is mounted directly on the output shaft of the first drive motor, thereby reducing the play between the drive motor and the conveyor drive means.

Preferably, the apparatus is provided with means for exerting opposite forces on the conveyor support means for tightening the conveyor means, thereby further reducing any play between the drive motor and the conveyor means.

In a preferred embodiment of the apparatus according to the present invention, wherein the conveyor means is a conveyor belt and wherein the conveyor drive means is a drive pulley, the conveyor belts have internal teeth and the drive pulleys are provided with teeth corresponding with the teeth of the conveyor belts. These features result in a further reduction of play and slip between drive motor and conveyor belt. A further improvement of the dimensional accuracy by elimination of play can be achieved in that each pulley is divided by at least one plane extending at right angles to the pulley axis, into at least two pulley parts rotatable relative to each other around the pulley axis. Preferably, each pulley is divided by two planes extending at right angles to the pulley axis into three pulley parts which are rotatable relative to each other around the pulley axis, the outer pulley parts each having a thickness substantially equal to a quarter of the thickness of the entire pulley, whereby loading the teeth of the conveyor belt are as uniformly as possible without play, which reduces wear and tear and prevents twisting or jamming of the conveyor belt.

To improve, between the conveyor support means, the contact between a conveyor belt and the object, thereby achieving an improved slip-free coupling between the conveyor belt and the object, the conveyor belts may be provided with an auxiliary press-down member arranged between the respective pair of conveyor support means for keeping the section of the belt situated between the conveyor support means in contact with the object to be conveyed. This does not require the use of a complicated construction, such as separately, pneumatically or hydraulically operated press-down rollers, but according to the present invention use can be advantageously made of an auxiliary press-down member arranged rigidly relative to the respective pair of conveyor support means, said member being substantially flat at the side being in contact with the conveyor belt and being provided with a resilient layer and a contact layer. This also enables the passage of any projecting portions of an object to be conveyed without damaging the conveyor belt, in which case it is advantageous when the insides of the conveyor belts are provided with a wear-resistant layer.

In another preferred embodiment of the apparatus according to the present invention, wherein the conveyor means is a conveyor chain and the conveyor drive means is a sprocket wheel, the conveyor chain is provided with a resilient layer at least at the side facing the object. In that case, an auxiliary hold-down member, at least at the side being in contact with the conveyor chain, is preferably provided with a synthetic plastics portion profiled in accordance with the profile of the conveyor chain. The resilient layer of the conveyor chain may be made of vulcanized rubber.

To prevent a thick object from damaging the conveyor means when touching the first conveyor means, a further preferred embodiment according to the present invention is provided with a run-on roller, whose axis parallels the axes of the first pair of conveyor support means. The run-on roller is preferably positioned relative to the first conveyor means in such a manner that the underside of the run-on roller is located at such a level that a plane defined on the one hand by the axis of that conveyor support means of the first pair of conveyor support means which is closest to the run-on roller, and on the other hand a point of the surface of the conveyor means present around said conveyor support means at the same level as the underside of the run-on roller, encloses an angle ranging between $0°$ and $45°$ with a vertical plane.

The driving of the second conveyor means can take place by the first drive motor via said coupling member, which may be a toothed belt. According to the present invention, there is preferably provided a second drive motor, with the first drive motor driving the first conveyor means and the second drive motor driving the second conveyor means, the two drive motors being coupled separately to the control device. Hereby it will suffice to use two motors that each needs to supply less power than when one motor is employed, so that the drive can be less expensive and requires less space. Moreover, it is achieved that each of the conveyor means can be driven accurately without slip, play or stretch of any coupling band, chain or belt adversely affecting the mutual conveying accuracy. If desired, the coupling member may be maintained for synchronization purposes.

The first drive motor is preferably provided with a detector for detecting the rotation of the conveyor drive means caused by the drive motor, which detector provides an input signal for the control device.

As a result, the control device can determine when the first drive motor has reached a desired position, and subsequently hold the first drive motor in this desired position.

According to the present invention, a position detector for detecting the position of the front of the object is arranged in such a manner that the position detector is located in a place which, measured in horizontal direction, is located between the axis of the first conveyor drive means and the processing device, thus achieving that the position of the front of the object can only be detected when the first assembly is in a horizontal position, so that the occurence of dimensional inaccuracies is opposed.

One preferred embodiment of the conveying and positioning apparatus according to the present invention will now be described, by way of example, with reference to the accompanying drawings, in which:

Fig. 1 is a diagrammatic, cross-sectional view of a preferred embodiment of the conveying and positioning apparatus according to the present invention;

Fig. 2 is a schematical, cross-sectional view of an auxiliary press-down member according to the present invention;

Fig. 3 is a schematical view of a pulley according to the present invention;

Fig. 4 is a schematical, cross-sectional view taken on the line IV-IV in Fig. 1;

Fig. 5 is a schematical, cross-sectional view taken on the line V-V in Fig. 4;

Fig. 6A-C schematically shows the function of the run-on roller according to the present invention on a larger scale than Fig. 1;

Fig. 7A-C shows different stages of a sawing cycle when using a conveying and positioning apparatus according to the present invention.

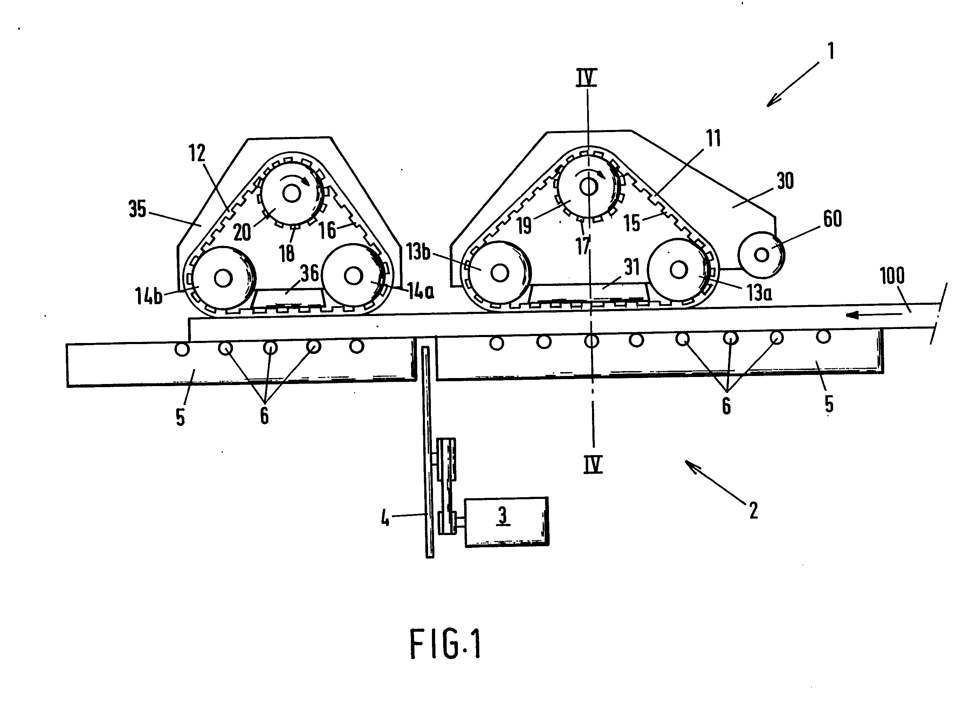

Fig. 1 shows a schematical, cross-sectional view of a conveying and positioning apparatus according to the present invention, indicated in general with reference numeral 1, together with a standard sawing machine 2, which comprises a saw blade 4 driven by a sawing machine motor 3 and a work table 5, which may be provided with guide rollers 6.

The conveying and positioning apparatus 1 comprises on either side of the saw blade 4 a first endless conveyor means 11 and a second endless conveyor means 12, which are mounted over a first pair of conveyor support means 13a, 13b and a second pair of conveyor support means 14a, 14b. In the example shown, the conveyor means are conveyor belts and the conveyor support means are rollers. To keep the conveyor belts 11, 12 taut, rollers 13a, 13b and 14a, 14b are provided with means (not shown) to exert on the rollers opposite forces, which means may include a spring. The inner sides of conveyor belts 11, 12 are provided with teeth 15, 16, corresponding with teeth 17, 18 of a pulley 19, 20.

The conveyor belts 11, 12 engage the top of an object 100 to be conveyed, such as a wooden beam, and function simultaneously as press-down members, because they exert a downwardly directed force on object 100, thereby pressing it against table 5.

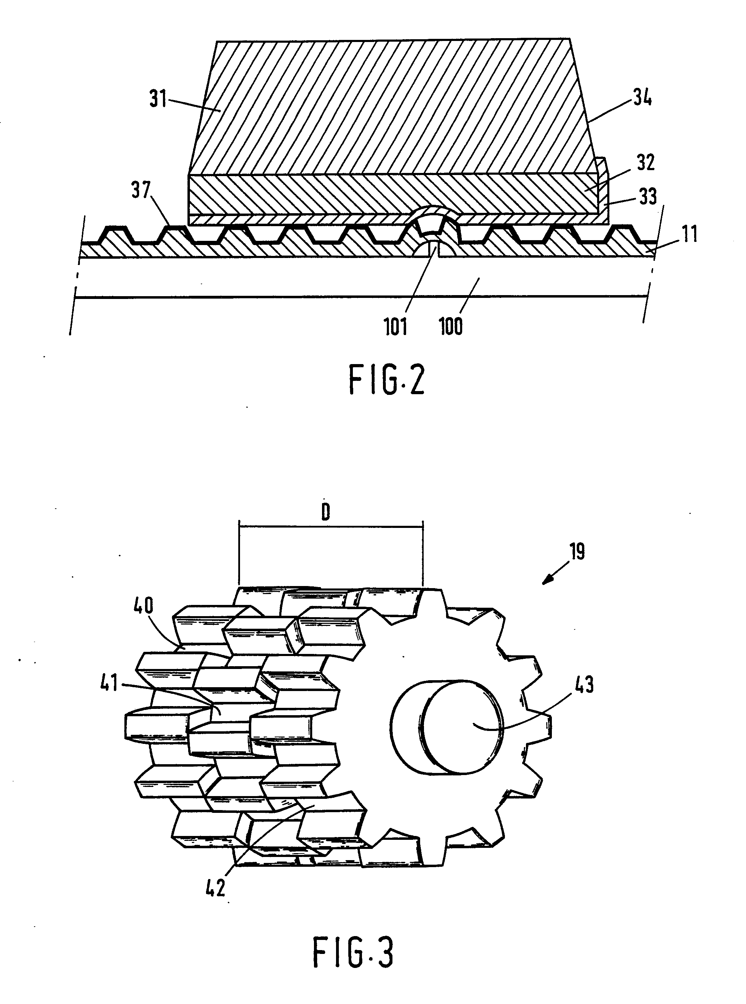

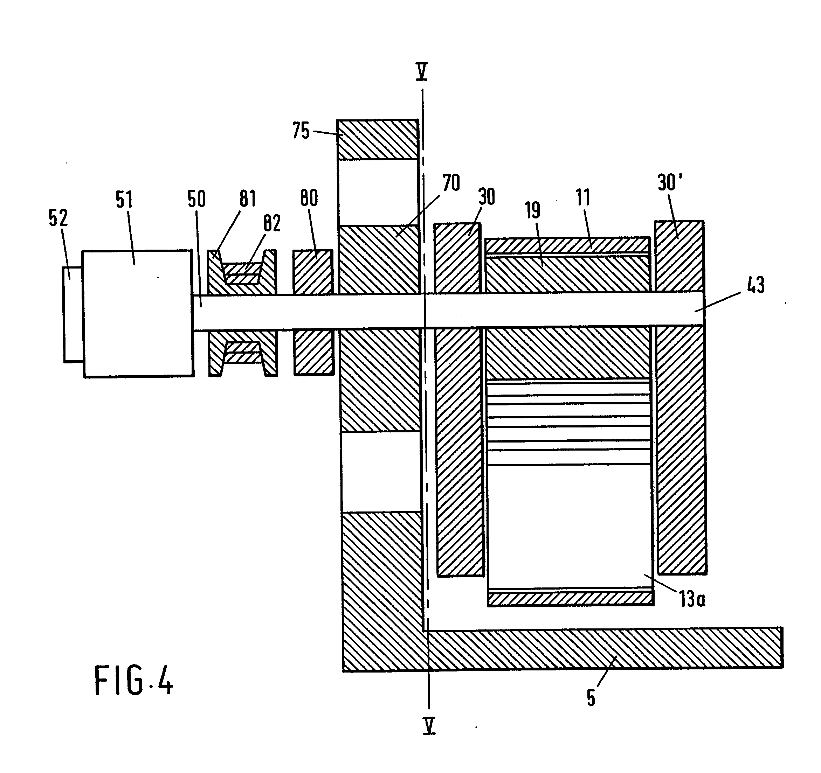

The shafts of rollers 13a, 13b, on either side of rollers 13a, 13b, are mounted in a frame 30 and a corresponding frame 30' shown in Fig. 4. Attached to frame 30, 30' is an auxiliary press-down member 31 extending along the width of conveyor belt 11 and being flat on the underside. As shown in Fig. 2, auxiliary press-down member 31 is provided at its underside with a resilient layer 32 and a contact layer 33 attached to the front 34 of auxiliary press-down member 31. Contact layer 33 is e.g. a thin layer of spring steel. When the object 100 has a portion 101 projecting at the top, conveyor belt 11 is thereby depressed against contact layer 33. As contact layer 33 yields, and can be pressed into resilient layer 32, damage to conveyor belt 11 is thus prevented. As, during the conveyance of object 100, conveyor belt 11 rubs along contact layer 33, the inside of conveyor belt 11 is provided with a wear-resistant layer 34. The pulley 19, as shown in Fig. 3, includes three pulley parts 40, 41, 42. The three pulley parts 40, 41, 42 are rotatable relative to each other around pulley axis 43, and can each be fixed with attachement means, not shown, relative to pulley axis 43. The thickness of pulley parts 40, 42 is equal to one quarter of the thickness D of the entire pulley 19. When a conveyor belt 11 is fixed around pulley 19, pulley parts 40, 42 are rotated through the same distance relative to pulley part 41 in such a manner that pulley parts 40, 42 are always in contact with one side of the teeth of conveyor belt 11 and that pulley part 41 is always in contact with the other side of said teeth. After this, pulley parts 40, 41, 42 are fixed relative to pulley axis 43, so that conveyor belt 11 has no play with respect to pulley 19.

Although not shown separately, it will be clear that the shafts of rollers 14a, 14b are mounted in a frame 35, only the rear portion of which is shown in Fig. 1, there being provided between rollers 14a, 14b an auxiliary press-down member 36 that is fitted with a resilient layer and a contact layer; that the inside of conveyor belt 12 is provided with a resilient layer; and that pulley 20 is divided into three pulley parts.

As shown in Fig. 4, pulley 19 is directly mounted on output shaft 50 of a first drive motor 51. Drive motor 51 is a D.C. motor but may also be a stepper motor.

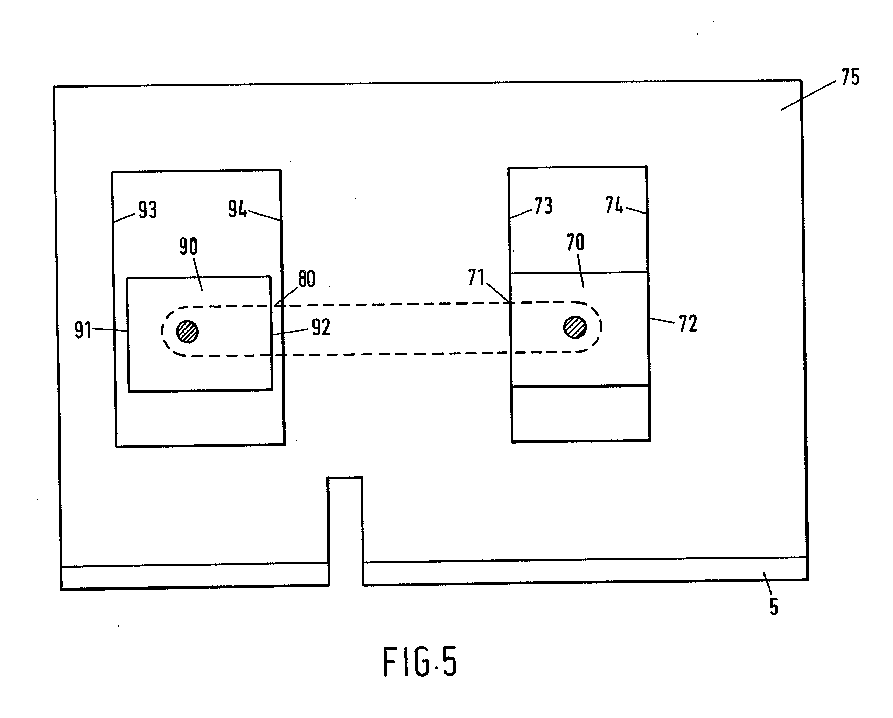

The axis 43 of pulley 19 and hence output shaft 50 is mounted in frame 30, 30', as already discussed and also in a height adjustment frame 70 and a connecting frame 80. As shown in Fig. 5, height adjustment frame 70 has vertical side faces 71, 72 being in sliding contact with vertical faces 73, 74 of a machine frame 75 fixedly connected to the work table 5. As a result, the assembly of first drive motor 51, pulley 19, frame 30, 30', rollers 13a, 13b and first conveyor belt 11 is movable vertically, while furthermore the assembly of frame 30, 30', rollers 13a, 13b, and first conveyor belt 11 is rotatable around pulley axis 43. As a result, the contact surface between conveyor belt 11 and the object to be conveyed 100 can always conform to the shape of the object 100, irrespective of any variations and/or differences in thickness. Pulley 20 is mounted directly on the output shaft of a second drive motor, not shown, while the axis of pulley 20, and hence the output shaft of the second drive motor, is mounted in frame 35, as already discussed, and also in connecting frame 80 and in a height adjustment frame 90. As shown in Fig. 5, the height adjustment frame 90 has vertical side faces 91, 92 and is movable freely between vertical faces 93, 94 of machine frame 75, while the distance between faces 93 and 94 is larger than that between faces 91 and 92. Fig. 5 likewise shows in dotted lines the connecting frame 80. As the axes of pulleys 19, 20 are both mounted in connecting frame 80, the mutual distance between both axes is constant. Because of this feature and the fact that height adjustment frame 90 has both vertical and horizontal freedom in machine frame 75, the axis of pulley 20 can move concentrically around the axis of pulley 19, so that the assembly of the second drive motor, pulley 20, frame 35, rollers 14a, 14b, and second conveyor belt 12 can describe a part of a cylindrical path around the axis of pulley 19, while furthermore the assembly of frame 35, rollers 14a, 14b, and second conveyor belt 12 is rotatable around the axis of pulley 20. This couples a vertical displacement of the axis of pulley 20, and a rotation of the assembly of frame 35, rollers 14a, 14b, and second conveyor belt 12 around the axis of pulley 20, to a horizontal displacement of conveyor belt 12. To obtain correction thereof, there is mounted on pulley axis 43 a sprocket wheel 81 engaged by a geared belt 82 in play-free relationship. Geared belt 82 engages also in play-free relationship with a sprocket wheel, not shown, mounted on the axis of pulley 20, comparable with sprocket wheel 81. Geared belt 82 is tightened, because the distance between the axes of pulleys 19, 20 is kept constant by connecting frame 80. The geared belt 82 produces a compensation rotation of the axis of pulley 20 when the axis of pulley 20 describes a part of a cylindrical path around pulley axis 43, while geared belt 82 prevents pulley 20 from being rotated with respect to pulley 19 when the assembly of frame 35, 35', rollers 14a, 14b, and second conveyor belt 12 is rotated around the axis of pulley 20.

Fig. 1 shows that a run-on roller 60 is mounted in frame 30, 30'. Run-on roller 60 facilitates the feeding of an object 100 underneath conveyor belt 11 and prevents conveyor belt 11 from being damaged by an object 100.

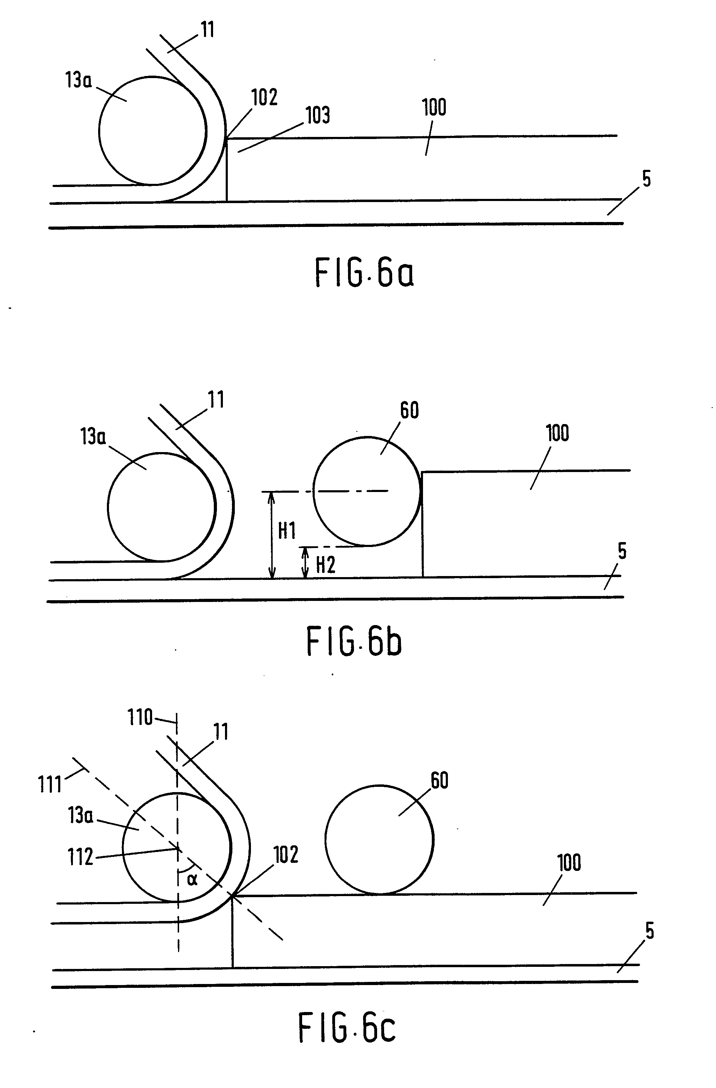

Fig. 6A shows how a thick object 100 comes into contact with conveyor belt 11 in the absence of a run-on roller. Because conveyor belt 11, at the location of the point of contact 102 with the edge 103, moves downwards practically vertically, conveyor belt 11 may be damaged by edge 103 of the object 100.

Fig. 6B, 6C shows that this is prevented by run-on roller 60. The height H1 of run-on roller 60 is defined as the distance from the axis of the run-on roller to the surface of the work table 5, when conveyor belt 11 rests on the surface of work table 5. The free space H2 underneath run-on roller 60 is defined as the distance from the underside of the run-on roller to the surface of work table 5, when conveyor belt 11 rests on the surface of work table 5. When the thickness of object 100 is larger than H1, object 100 will be retained by run-on roller 60 (Fig. 6B). When the thickness of object 100 is smaller than H1, but larger than H2, object 100 will first lift run-on roller 60 (Fig. 6C). Conveyor belt 11 in this case, at the location of point of contact 102 with the edge 103, does not move vertically downwards, but moves partly along with object 100. In the embodiment shown, the angle $\alpha$ being enclosed between a vertical plane 110 and a plane 111 defined by axis 112 of roller 13a and point of contact 102, is equal to 45°. It will be clear that the smaller angle $\alpha$ is chosen, the smaller the vertical component of the velocity of the conveyor belt 11 at the point of contact 102 will be.

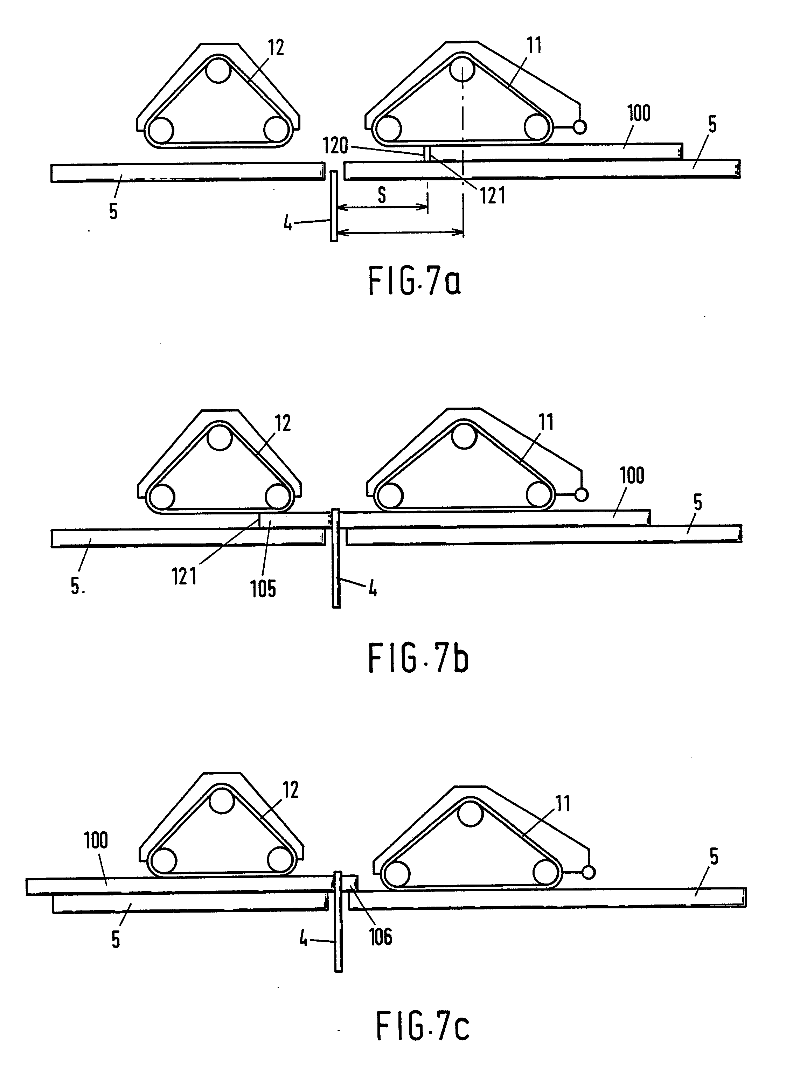

With reference to Fig. 7, there is now described a sawing cycle when use is made of a conveying and positioning apparatus 1 according to the present invention. A beam 100 is fed onto work table 5. Conveyor belt 11 is lifted in the above described manner so as to engage with the top of beam 100, while conveyor belt 12 is lifted by connecting frame 80, so that no run-on roller is necessary for conveyor belt 12. A known per se position detector 120 is located between saw blade 4 and the axis of pulley 19, at a known distance S with respect to saw blade 4 measured in horizontal direction, so that position detector 120 detects the passage of the front 121 of beam 100 when the contact surface of conveyor belt 11 and beam 100 is in a horizontal position. Position detector 120 then transmits a signal to a control device, not shown. The control device is programmed to first saw off a part 105 from beam 100, e.g. 5 cm. The control device effects rotation of drive motor 51 for the distance required to allow beam 100 to traverse the desired distance from the detected position, while the control device receives from a rotation detector 52 a signal that represents the rotation of pulley 19 produced by drive motor 51. When the signal received by the control device from rotation detector 52 corresponds with the anticipated signal that represents the desired rotation, the control device stops driven motor 51. Beam 100 is now fixed by conveyor belt 11 relative to saw blade 4. Subsequently, the control device transmits a control signal to a saw displacement device, not shown, which displaces saw blade 4 in such a manner that the part 105 is sawn off, after which saw blade 4 returns to the rest position.

The control device is programmed to then saw off beam 100 to a desired length, e.g. 2 m. The control device causes the drive motor 51 and the second drive motor to rotate for the distance required for having beam 100 travel the desired distance, wherein the conveyor belt 12 cooperates with the conveyor belt 11, and wherein the belt 12 transports the beam 100 when the beam 100 is no longer in contact with the conveyor belt 11. When the signal received by the control device from rotation detector 52 corresponds with the anticipated signal representing the desired rotation, the control device stops drive motor 51 and the second drive motor. Beam 100 is now fixed by belt 12 with respect to saw blade 4. Subsequently, the control device transmits a control signal to the saw displacement device, which displaces the saw blade 4 in such a manner that the part 106 is sawn off. Beam 100 now has the desired length, wherein the accuracy achieved is only determined, in fact, by the accuracy with which rotation detector 52 can detect the rotation of pulley 19 produced by drive motor 51. When the rotation detector supplies a digital signal to the control device, e.g. a known number of pulses for the revolution of pulley 19, the accuracy achieved is independent of the desired length. Controlled by the control device, the second drive motor is rotated further to allow conveyor belt 12 to remove beam 100 sawn to size from saw blade 4.

Although the conveying and positioning apparatus according to the present invention is described together with a standard sawing machine, it will be clear that the conveying and positioning apparatus according to the invention can be used together with any processing device, such as a milling, drilling, punching, shearing or cutting device, wherein it is desired to quickly convey the object to be processed and to accurately position it relative to the processing device.

**Claims**

1. A conveying and positioning apparatus for longitudinally conveying an elongate object to be processed to and from a processing device, and for fixing the object to be processed in a desired position relative to the processing device comprising:
- a first endless conveyor means mounted over a first pair of spaced apart, parallel conveyor support means;
- a second endless conveyor means mounted over a second pair of spaced apart, parallel conveyor support means;
- a drive means for synchronously driving the first and the second conveyor means; and
- a control device for controlling the drive means;
- the first pair and the second pair of conveyor support means being disposed upstream, and downstream, respectively, of the processing device, characterized in that the first assembly of first conveyor means and first pair of conveyor support means is movable in vertical direction and that the second assembly of second conveyor means and second pair of conveyor support means is movable both vertically and horizontally, said second assembly being connected to the first assembly by means of a connecting frame for movement along a cylindrical path around an axis associated with the first assembly, parallel to the axis of rotation of the first pair of conveyor support means

2. An apparatus as claimed in claim 1, characterized in that there is provided a first conveyor drive means and a second conveyor drive means for the first and the second conveyor means, respectively; that the first assembly is rotatable around the axis of the first conveyor drive means and that the second assembly is rotatable around the axis of the second conveyor drive means; and that the two conveyor drive means are interconnected by means of a coupling member.

3. An apparatus as claimed in claim 1 or 2, wherein the drive means includes at least a first drive motor, characterized in that the first conveyor drive means is mounted directly on the output shaft of the first drive motor.

4. An apparatus as claimed in any one of claims 1-3, characterized by means for exerting opposite forces on the conveyor support means to tighten the conveyor means.

5. An apparatus as claimed in any one of claims 1-4, wherein the conveyor means is a conveyor belt and wherein the conveyor drive means is a drive pulley, characterized in that the conveyor belts are provided with internal teeth and that the drive pulleys are provided with teeth corresponding with the teeth of the conveyor belts.

6. An apparatus as claimed in claim 5, characterized in that each pulley is divided by at least one plane extending at right angles to the pulley axis, into at least two pulley parts rotatable relative to one another around the pulley axis.

7. An apparatus as claimed in claim 6, characterized in that each pulley is divided by two planes extending at right angles to the pulley axis into three pulley parts rotatable relative to each other around the pulley axis and that the outer pulley parts each have a thickness substantially equal to a quarter of the thickness of the entire pulley.

8. An apparatus as claimed in at least any one of claims 5-7, wherein at least one of the conveyor belts is provided with an auxiliary press-down member arranged between the respective pair of conveyor support means for keeping the portion of the conveyor belt situated between the conveyor support means in contact with the object to be conveyed, characterized in that the auxiliary press-down member is arranged rigidly relative to the respective pair of conveyor support means; that the auxiliary press-down member is substantially flat at the side being in contact with the conveyor belt; and that the auxiliary press down member is provided with a resilient layer and a contact layer at the side being in contact with the conveyor belt.

9. An apparatus as claimed in any one of claims 5-8 characterized in that the insides of the conveyor belts are provided with a wear-resistant layer.

10. An apparatus as claimed in at least any one of claims 1-4, wherein the conveyor means is a conveyor chain and wherein the conveyor drive means is a sprocket wheel, characterized in that the conveyor chain is provided with a resilient layer at least at the side facing the object.

11. An apparatus as claimed in claim 10, wherein at least one of the conveyor chains is provided with an auxiliary press-down member arranged between the respective pair of conveyor support means for keeping the portion of the conveyor chain situated between the conveyor support means in contact with the object to be conveyed, characterized in that the auxiliary press-down member, at least at the side being in contact with the conveyor chain, is provided with a synthetic plastics portion profiled in accordance with the profile of the conveyor chain.

12. An apparatus as claimed in at least any of the preceding claims, characterized in that there is provided a run-on roller placed upstream of the first assembly and connected thereto, the axis of said roller being parallel to the axes of the first pair of conveyor support means.

13. An apparatus as claimed in claim 12, characterized in that the underside of the run-on roller is disposed at such a height that a plane defined on the one hand by the axis of that conveyor support means of the first pair of conveyor support means which is closest to the run-on roller, and on the other hand a point of the surface of the conveyor means present around said conveyor support means at the same level as the underside of the run-on roller, encloses an angle ranging between $0°$ and $45°$ with a vertical plane.

14. An apparatus as claimed in at least any of the preceding claims, characterized by a second drive motor, the first drive motor driving the first conveyor means and the second drive motor driving the second conveyor means, wherein the two drive motors are coupled separately to the control device.

15. An apparatus as claimed in at least any of the preceding claims, characterized in that the first drive motor is provided with a detector for detecting the rotation of the conveyor drive means produced by the drive motor, which detector provides an input signal for the control device.

16. An apparatus as claimed in at least any of the preceding claims, wherein there is provided a position detector for detecting the position of the front of the object, characterized in that the position detector is located in a place which, measured in horizontal direction, is situated between the axis of the first conveyor drive means and the processing device.

FIG·1

EP 0 366 200 A1

FIG·2

FIG·3

FIG.4

FIG·5

EP 0 366 200 A1

FIG.6a

FIG.6b

FIG.6c

FIG.7a

FIG.7b

FIG.7c

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | DE-U-8 714 714  (H. HUNDEGGER) <br> * Whole document * <br> --- | 1-3,5 | B 27 C  1/12 <br> B 27 B  25/04 <br> B 27 B  31/00 <br> B 23 Q  7/03 |
| Y | US-A-2 178 541  (F. NICHOLSON) <br> * Column 2, lines 35-43; figures 4,5 * <br> --- | 1-3,5 | |
| Y | US-A-2 776 679  (H. KING) <br> * Figure 4 * <br> --- | 1-3,5 | |
| A | GB-A-2 042 949  (L. SYARTO) <br> * Figure 4 * <br> --- | 8,11 | |
| A | DE-A-2 704 634  (E. KALLFASS) <br> * Whole document * <br> --- | 8,11 | |
| A | FR-A-1 563 007  (MASCHINENFABRIK ZUCKERMANN) <br> * Whole document * <br> --- | 8,11 | |
| A | FR-A-1 156 934  (ETABLISSEMENT GUILLIET) <br> * Whole document * <br> --- | 11 | **TECHNICAL FIELDS SEARCHED (Int. Cl.5)** |
| A | EP-A-0 097 634  (AB GUSTAN KÄHR) <br> * Claims 1,3 * <br> ----- | 15,16 | B 27 B <br> B 27 C <br> B 23 Q |

The present search report has been drawn up for all claims

| Place of search | Date of completion of the search | Examiner |
|---|---|---|
| THE HAGUE | 29-01-1990 | KORTH C-F.F.A. |

EPO FORM 1503 03.82 (P0401)